Europäisches Patentamt

European Patent Office

Office européen des brevets

(19)

(11) Publication number: 0 459 233 A2

# EUROPEAN PATENT APPLICATION

(21) Application number: 91107899.6

(22) Date of filing: 16.05.91

(51) Int. Cl.5: G06F 12/12

(30) Priority: 29.05.90 US 529866

(43) Date of publication of application:
04.12.91 Bulletin 91/49

(84) Designated Contracting States:
DE FR GB IT

(71) Applicant: NATIONAL SEMICONDUCTOR
CORPORATION
2900 Semiconductor Drive
Santa Clara, CA. 95051-8090(US)

(72) Inventor: Alpert, Donald B.
73 Claremont Avenue
Santa Clara, CA 95051(US)
Inventor: Oz, Oved
3 Habanim Street
44207 Kafar Saba(IL)
Inventor: Intrater, Gideon
46 Sharet Street
Ramat-Gan, 52413(IL)
Inventor: Marko, Reuven
14 Hashiva Street
IL-42306 Natanya(IL)
Inventor: Shacham, Alon
8 Natan Hachacham Street
IL-63413 Tel-Aviv(IL)

(74) Representative: Sparing Röhl Henseler
Patentanwälte European Patent Attorneys
Rethelstrasse 123
W-4000 Düsseldorf 1(DE)

(54) Selectively locking memory locations within a microprocessor's on-chip cache.

(57) A microprocessor architecture that includes capabilities for locking individual entries into its integrated instruction cache and data cache while leaving the remainder of the cache unlocked and available for use in capturing the microprocessor's dynamic locality of reference. The microprocessor also includes the capability for locking instruction cache entries without requiring that the instructions be executed during the locking process.

FIG. 2

The present invention relates to microprocessor architectures and, in particular, to a method and apparatus for locking selected entries in integrated cache memory.

In a conventional single-chip microprocessor architecture, the central processing unit processes instructions and operands which it retrieves from main memory via an external interface bus. Because the central processing unit can execute its functions at a rate much faster than the rate at which the instructions and operands can be retrieved from external main memory, a small high-speed cache memory is often located on-chip between the central processing unit and main memory to minimize the time spent by the central processing unit waiting for instructions and data.

A cache memory is typically organized as a number of blocks of data or instruction information. Each cache block has an associated address tag that uniquely identifies the corresponding block of main memory of which it is a copy. Each time the central processing unit makes an external memory reference, an address tag comparison is made to determine whether the requested data or referenced instruction is stored in the integrated cache. If it is stored in the cache (a "hit"), then the information is provided to the processor from the cache. If it is not stored in the cache (a "miss"), then the information is retrieved from main memory for use by the processor and to replace a block presently stored in the cache in accordance with a replacement algorithm.

Cache memories may be organized into groups of smaller associative memories called sets, each set containing a number of storage locations, referred to as the set size. Thus, for a cache size m, divided into L sets, there are s = m/L storage locations in each set. When an address in main memory is mapped into the cache, it can appear in any of the L sets. For a cache of a given size, searching of the cache sets in parallel for a "hit" can improve access time by a factor of L.

In earlier microprocessor architectures, the cache, while located in the microprocessor's computing cluster, was not integrated on the same semiconductor "microchip" with the central processing unit. Presently available microprocessors utilize a cache memory which is integrated "on-chip" to provide the advantage of further reducing the time delay inherent in going "off-chip" for information. Integrated cache is essential for achieving top microprocessor performance.

An advanced microprocessor architecture that incorporates "on-chip" cache memory is the National Semiconductor Corporation 32-bit NS32532 microprocessor. The on-chip cache of the NS32532 device includes a 512-byte instruction cache and a separate 1024-byte data cache.

The instruction cache of the NS32532 microprocessor stores 512-bytes in a direct-map organization. That is, five-bits of a reference instruction's virtual address select 1 of 32 instruction cache sets. Each set contains 16-bytes of code and a log that holds address tags comprising the 23 most-significant bits of the physical address for the locations stored in that set.

The instruction cache of the NS32532 device also includes a 16-byte instruction buffer from which it can transfer 32-bits of code per cycle to the loader of the microprocessor's instruction pipeline. If the reference instruction is found in the instruction cache, then the instruction buffer is loaded directly from the selected instruction cache set. If the reference instruction is not found in the instruction cache, then the instruction cache transfers the virtual address of the reference to the memory management unit which translates the virtual address to a corresponding physical address for a bus interface unit. The bus interface unit then initiates a read cycle to load the reference instruction from main memory via the external bus. The pipeline's instruction buffer is then written to one of the sets of the instruction cache in accordance with the replacement algorithm.

The data cache of the NS32532 device stores 1024-bytes of data in a two-way set associative organization. That is, each set of the data cache includes two entries containing 16-bytes and two address tags that hold the 23 most-significant bits of the physical address for locations stored in the two entries. Five-bits of the virtual address of the reference are used to select the appropriate set within the data cache from which to read the two entries. Simultaneously, the integrated memory management unit of the NS32532 device is translating the virtual address and transferring the resultant physical address to the data cache and to the bus interface unit. The data cache compares the two address tags with the physical address while the bus interface unit initiates an external bus cycle to read the data from main memory. If the cache reference is a hit, then the selected data is aligned by the data cache and transferred to the execution unit while the bus interface unit cancels the external bus cycle. If the cache reference is a miss, then the bus interface unit completes the external bus cycle and transfers data from main memory to the execution unit and to the data cache, which updates its cache entry in accordance with its replacement algorithm.

Both the instruction cache and the data cache of the NS32532 microprocessor support an operating mode to lock their contents. This feature can be used in real-time systems to allow faster on-chip access to the most critical subroutines and data.

While providing a highly desirable cache locking feature, the NS32532 microprocessor requires locking of the entire cache contents. In many applications, however, only a portion of the cache is required to store the time-critical code and data. Consequently, it is inefficient to require that the entire cache be locked.

The present invention as defined in the independent claims provides a microprocessor architecture that includes capabilities for locking individual entries of its integrated instruction cache and data cache while leaving the remainder of the cache unlocked and available for use in capturing the microprocessor's dynamic locality of reference. The microprocessor may also include the capability for locking instruction cache entries without requiring that the instructions be executed during the locking process.

Other features and advantages of the present invention will be appreciated by reference to the detailed description of the invention provided below, which should be considered in conjunction with the accompanying drawings.

Figure 1 is a block diagram illustrating a microprocessor architecture that incorporates the concepts of the present invention.

Figure 2 is a block diagram illustrating the structure of a data cache utilized in the Fig. 1 architecture.

Figure 3 is a block diagram illustrating the structure of an instruction cache utilized in the Fig. 1 architecture.

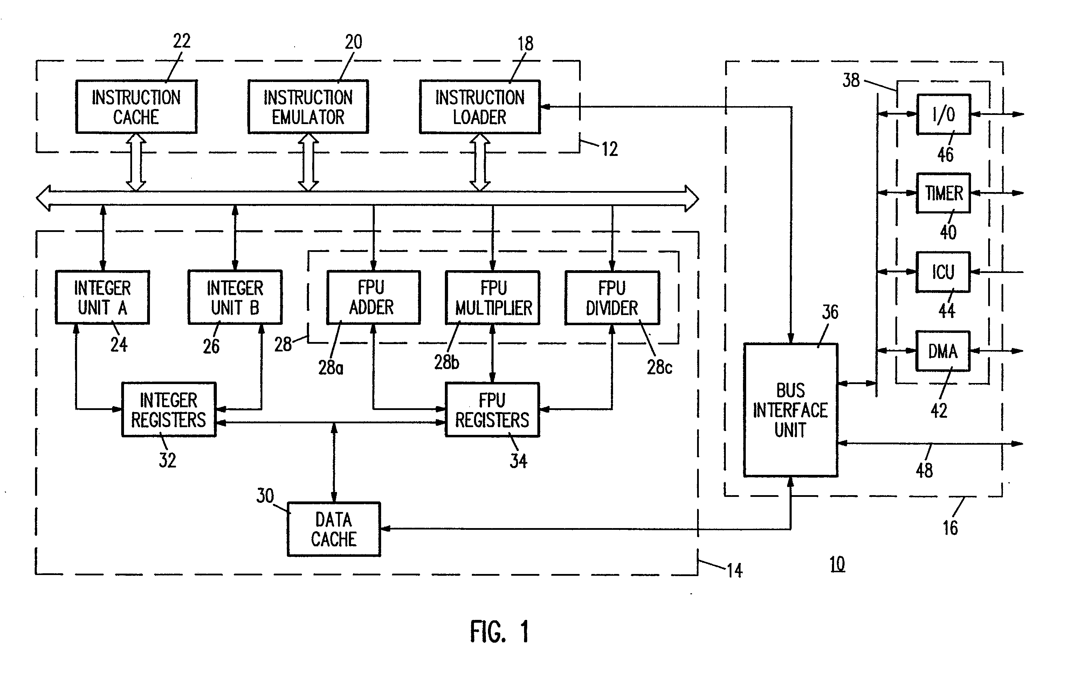

Fig. 1 shows the architecture of a microprocessor 10 that includes multiple, pipelined functional units capable of executing two instructions in parallel.

The microprocessor 10 includes three main sections: an instruction processor 12, an execution processor 14 and a bus interface processor 16.

The instruction processor 12 includes three modules: an instruction loader 18, an instruction emulator 20 and an instruction cache 22. These modules load instructions from the external system through the bus interface processor 16, store the instructions in the instruction cache 22 and provide pairs of instructions to the execution processor 14 for execution.

The execution processor 14 includes two 4-stage pipelined integer execution units 24 and 26, a double-precision 5-stage pipelined floating point execution unit 28, and a 1024 byte data cache 30. A set of integer registers 32 services the two integer units 24 and 26; similarly, a set of floating point registers 34 services the floating point execution unit 28.

The bus interface processor 16 includes a bus interface unit 36 and a number of system modules 38. The bus interface unit 36 controls the bus accesses requested by both the instruction processor 12 and the execution processor 14. In the illustrated embodiment, the system modules 38 include a timer 40, a direct memory access (DMA) controller 42, an interrupt control unit (ICU) 44 and I/O buffers 46.

The instruction loader 18 partially decodes instructions retrieved from main memory and places the partially decoded instructions in the instruction cache 22. That is, the instruction loader 18 translates an instruction stored in main memory (not shown) into the decoded format of the instruction cache 22. The instruction loader 18 is also responsible for checking whether any dependencies exist between consecutive instructions that are paired in a single instruction cache entry.

The instruction cache 22 contains 512 entries for partially-decoded instructions.

Each entry in the instruction cache 22 contains either one or two instructions stored in a partially-decoded format for efficient control of the various functional units of the microprocessor 10.

Each entry in instruction cache 22 also contains auxiliary information that indicates whether the two instructions stored in that entry are independent, so that they can be executed in parallel, or dependent, so that they must be executed sequentially.

Further information relating to the architecture of microprocessor 10 and its partially decoded instruction cache is provided in commonly-assigned application Serial No. _____ , filed on the same date as this application and titled PARTIALLY DECODED INSTRUCTION CACHE; just-referenced application Serial No. _____ is hereby incorporated by reference to provide further background information regarding the present invention.

The instruction emulator 20 executes special instructions defined in the instruction set of the microprocessor 10. When the instruction loader 18 encounters such an instruction, it transfers control to the emulator 20. The emulator is responsible for generating a sequence of core instructions that perform the function of a single complex instruction. In this regard, the emulator 20 provides ROM-resident microcode. The emulator 20 also controls exception processing and self-test operations.

The two 4-stage integer pipelines 24 and 26 perform basic arithmetic/logical operations and data memory references. Each integer pipeline 24,26 can execute instructions at a throughput of one per system clock cycle.

The floating point execution unit 28 includes three sub-units that perform single-precision and double-precision operations. An FPU adder sub-unit 28a is responsible for add and convert operations, a second

3

sub-unit 28b is responsible for multiply operations and a third sub-unit 28c is responsible for divide operations.

When add and multiply operations are alternately executed, the floating point execution unit 28 can execute instructions at a throughput of one instruction per system clock cycle.

Memory references for the floating point execution unit 28 are controlled by one of the integer pipelines 24,26 and can be performed in parallel to floating-point operations.

Data memory references are performed using the 1-Kbyte data cache 30. The data cache 30 provides fast on-chip access to frequently used data. In the event that data are not located in the data cache 30, then off-chip references are performed by the bus interface unit (BIU) 36 using the pipelined system bus 48.

The data cache 30 employs a load scheduling technique so that it does not necessarily stall on misses. This means that the two execution pipelines 24,26 can continue processing instructions and initiating additional memory references while data are being read from main memory.

The bus interface unit 36 can receive requests for main memory accesses from either the instruction processor 12 or the execution processor 14. These requests are sent to the external pipelined bus 48. The external bus can be programmed to operate at half the frequency of the microprocessor 10; this allows for a simple instruction interface at a relatively low frequency while the microprocessor 10 executes a pair of instructions at full rate.

The instruction set of the microprocessor 10 is partitioned into a core part and a non-core part. The core part of the instruction set consists of performance critical instructions and addressing modes, together with some special-function instructions for essential system operations. The non-core part consists of the remainder of the instruction set. Performance critical instructions and addressing modes were selected based on an analysis and evaluation of the operating system (UNIX in this case) workload and various engineering, scientific and embedded controller applications. These instructions are executed directly as part of the RISC architecture of microprocessor 10.

Many systems, like laser-beam printers and digital signal processors, can deliver high performance with relatively slow external memory by scheduling memory loads in advance of processing the information. Thus, in accordance with the present invention, and as described in greater detail below, selected individual entries of each of the Data Cache 30 and Instruction Cache 22 can be locked on-chip for fast access to critical locations in real-time applications.

These locking features are implemented through the Configuration Register (CFG) that is included in the internal register file of microprocessor 10.

The microprocessor 10 includes seventy-five internal registers grouped in internal register file according to functions as follows: thirty-two general-purpose registers, thirty-two single-precision floating-point data registers, three dedicated address registers, one Processor Status Register (PSR), one Configuration Register (CFG), one Floating-Point Status Register (FSR), and five debug registers.

The Configuration Register (CFG) is used to enable or disable various operating modes of the microprocessor 10, including the locking of selective entries in the Data Cache 28 and Instruction Cache 32. The format of the Configuration Register (CFG) is as follows:

| 31 | 9 7 | 6 | 5 | 4 | 3 | 2 | 1 | 0 |
|---|---|---|---|---|---|---|---|---|
| Reserved | PS | ISR | LIC | IC | LDC | DC | O | F |

The various control bits of the Configuration Register (CFG) are described below:

F      Floating-Point Instruction Set. This bit enables the execution of floating point instructions.

DC      Data Cache Enable. This bit enables the Data Cache 30 to be accessed for data reads and writes.

LDC      Lock Data Cache. This bit controls whether a missing line that is placed in the Data Cache 30 will be locked into the cache. Locked lines are not subject to replacement from the Data Cache 30.

IC      Instruction Cache Enable. This bit enables the Instruction Cache 22 to be accessed for instruction fetches.

LIC      Lock Instruction Cache. This bit controls whether a missing instruction that is placed in the Instruction Cache 22 will be locked into the cache. Locked lines are not subject to replacement from the Instruction Cache 22.

ISR      Interrupt Service Registers. While this bit is 1, access to specific general-purpose registers is restricted and a trap occurs when an attempt is made to access these registers in user-mode.

PS       This field specifies the page size used for the PAGE mechanism of microprocessor 10.

At Reset, Configuration Register bits 0 through 9 are cleared to 0.

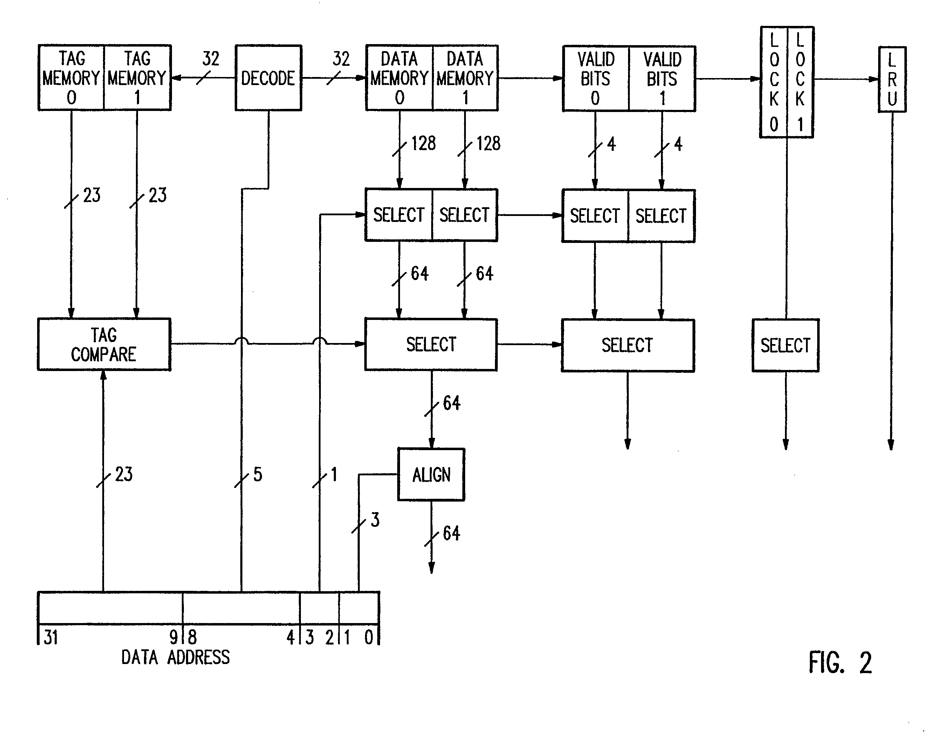

Fig. 2 shows the structure of the Data Cache 30. The 1-Kbyte Data Cache 30 utilizes a 2-way, set-associative organization with 64 lines. ("2-way, set associative" means that for each memory address there are two lines in the cache where the address can be placed. The two lines are collectively called a "set".) Each line contains a 23-bit tag, which holds the most-significant bits of the address of the data stored in the line, along with four double-words of data, four validity bits, and a lock-bit. (There is one validity bit for each double-word of data.) For each set there is an additional bit that indicates which line has been more recently used for purposes of implementing least-recently-used (LEU) replacement.

The Data Cache 28 is enabled for a data read if all of the following are true: bit CFG.DC of the Configuration Register is 1; the reference is not to read the semaphore while executing an MBITI instruction; and the reference is neither Interrupt-Acknowledge nor End-of-Interrupt bus cycle.

If the Data Cache 30 is disabled, then the data read bypasses the Data Cache 30 and the contents of the Data Cache 30 are unaffected; the data is read directly from external memory. The data is then aligned and used to execute the instruction.

If the Data Cache 30 is enabled for a data read, then address bits 4-8 of the data address are decoded to select the set where the data may be stored. The two lines of the selected set are read and both tags are compared with the 23 most-significant bits of the data's physical address. Either a double-word or quadword is read from the cache, depending on the operand's length. For a double-word reference, bits 2 and 3 of the data's address select the double-word and the corresponding validity bit from each line of the selected set. For a quad-word reference, two double-words and their corresponding validity bits are accessed. If a tag in one of the lines matches and the selected double-word(s) of that line is valid, then the data is aligned and used to execute the instruction. Otherwise, the missing data is read from external memory, as explained above.

If the referenced data is missing from Data Cache 30 and the contents of both lines in the selected set are locked to fixed locations and neither tag matches the referenced data's address, then the handling of the reference is identical to that described above for the case when the Data Cache 30 is disabled.

If the referenced data is missing from the Data Cache 30 and either one of the tags in the selected set matches the data's address or at least one of the lines is not locked, the following actions are taken. First, if the tag of either line in the set matches the data's address, then that line is selected for updating. If neither tag matches and one of the lines is locked, then the unlocked line is selected for replacement. If neither tag matches and both lines are unlocked, then the less recently used line is selected for replacement. Then, regardless of whether the selected line is replaced or merely updated, the missing data is read from external memory. Either a double-word or quad-word is read depending on the length of the operand and the bus width. After being read from memory, the missing data is aligned and used to execute the instruction.

If the Cache Inhibit Input (CIIN) to microprocessor 10 is not asserted (low) during the bus cycle to read the missing data and the access was not to one of the registers of the on-chip peripherals, and the access was not initiated by a LOADNi, LOADNf or LOADNuf instruction, then the Data Cache 28 is updated as follows. If the tag in the line matched the data's address at the time the miss was detected, then the double-word or quad-word read from the system bus is written to the Data Cache 30 and the corresponding validity bits are set. If the tag in the line did not match the data's address at the time the miss was detected, then the tag of the line selected for replacement is loaded with the 23 most significant bits of the data's address, the line becomes locked if bit CFG.LDC of the Configuration Register is 1, the double-word or quad-word read from the system bus is written to the Data Cache 30, the corresponding validity bits are set, and the remaining validity bits are cleared.

The Data Cache 30 is enabled for a data write whenever bit CFG.DC of the Configuration Register is 1, including references for MBITI instructions. Address bits 4-8 of the data address are decoded to select the Data Cache set where the data may be stored. The two lines of the selected set are read and both tags are compared with the 23 most-significant bits of the data's physical address. Either a double-word or quad-word can be written, depending on the operand's length. For a double-word reference, bits 2 and 3 of the data's address select the double-word and the corresponding validity bit from each line of the selected set. For a quad-word reference, two double-words and their corresponding validity bits are accessed. If a tag in one of the lines matches and the selected double-word(s) of that line is valid, then the data is aligned and used to update the double-word(s) in the Data Cache 30. If one of the double-words for the quad-word reference is valid but the other is not, then only the valid double-word is updated. If the data is not located in the Data Cache 30, then its contents are unaffected. The data is always written through to external memory.

The contents of the Data Cache 30 can be invalidated by either software or hardware.

The Data Cache 30 is invalidated by software as follows: The entire Data Cache contents, including locked lines, are invalidated while bit CFG.DC of the Configuration Register is 0. The LRU selection bit for each Data Cache set is also initialized to 0 while bit CFG.DC is 0. The CINV instruction can be executed to invalidate the entire Data Cache contents of Data Cache 30. Executing CINV invalidates either the entire cache or only unlocked lines, according to the instruction's U-option.

The Data Cache 28 is invalidated in hardware as follows: The entire Data Cache contents, including locked lines, are invalidated when the Invalidate Data Cache input ($\overline{\text{INVDC}}$) is asserted while the Invalidate Block input ($\overline{\text{INVBLK}}$) is high. When $\overline{\text{INVDC}}$ is asserted while $\overline{\text{INVBLK}}$ is low, the microprocessor 10 reads an address from the Address Bus and searches to determine whether a copy of the 16-byte block specified by the address is found in one line of the Data Cache 28. If the search is successful, then the line is invalidated regardless of whether it is locked. Invalidation of a single block can only be performed when the microprocessor 10 has relinquished its Address Bus in response to a Hold Request input ($\overline{\text{HOLD}}$) or an extended bus retry.

When a locked line is invalidated it also becomes unloaded.

Depending on the system configuration, either of two techniques for maintaining coherence between the Data Cache 28 and external memory may be implemented.

Whenever a location in memory is modified by a bus master other than microprocessor 10 itself, the address can be presented to the microprocessor 10 along with a request to invalidate the 16-byte block. For example, this technique is appropriate for a single-processor system with a low-rate of I/O transfers to memory.

Systems that use an external cache memory can maintain coherence between the on-chip Data Cache 30 and the external cache by requiring that the contents of the Data Cache 30 are always a subset of the external cache. The system can then freely employ any technique to maintain coherence between the external cache and main memory. To enforce the requirement that the Data Cache 30 contains only lines that are also in the external cache, it is necessary for external hardware to request that the microprocessor 10 invalidate a block whenever the status of that block changes in the external cache. For example, an external Cache Control Unit can implement this requirement by invalidating one or more blocks (depending on the line size of the external cache) whenever a line in the external cache is replaced, invalidated, or updated.

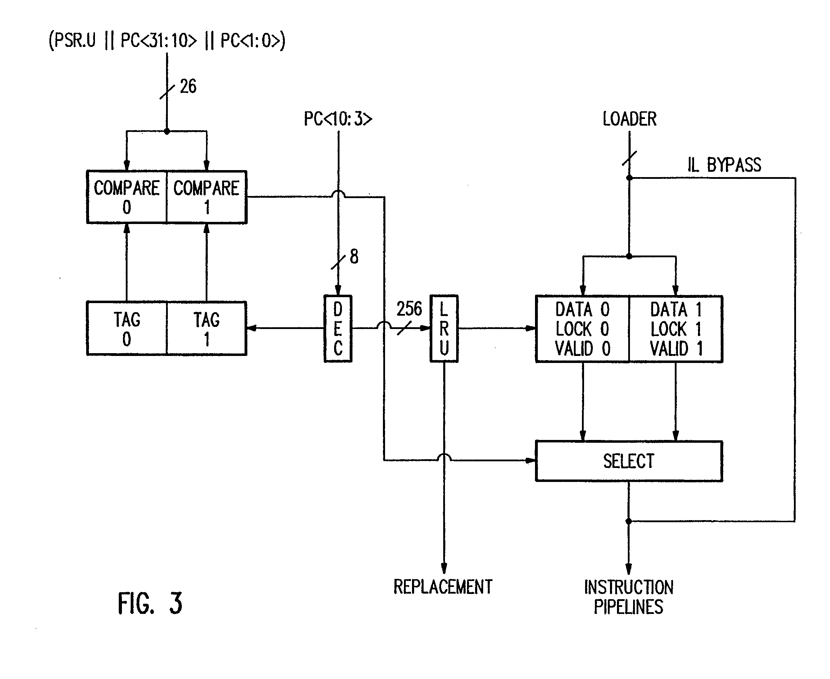

Fig. 3 shows the structure of the Instruction Cache 22. The Instruction Cache 22 utilizes a 2-way, set-associative organization with 512 entries for partially decoded instructions. ("2-way, set associative" means that for each memory address there are two entries in the Instruction Cache 32 where the instruction located at that address can be placed. The two entries are called a set.) Each entry contains one or two partially-decoded instructions that are represented with fixed fields for opcode, source and destination register numbers, and immediate values. The entry also includes auxiliary information used to control the sequence of instruction execution, including a bit to indicate whether the entry contains two consecutive instructions that can be executed in parallel, another bit to indicate whether the entry is for a complex instruction that is emulated, and additional information representing the length of the instruction(s) in a form that allows fast calculation of the next instruction's address.

Associated with each entry in the Instruction Cache 22 is a bit tag which PSR.U along with holds the 22 most-significant bits and bit 2 of the address of the instruction stored in the entry. (Note that address bit 10 of the instruction stored in the tag is only significant when operating with half the Instruction Cache 22). In the event that two consecutive instructions are paired in an entry, the tag corresponds to the instruction at the lower address. Along with the tag are 2 bits that indicate whether the entry is valid and whether it is locked. For each set there is an additional bit that indicates which entry has been most recently used for purposes of Least-Recently-Used (LRU) replacement.

The Instruction Cache 22 is enabled for an instruction fetch if bit CFG.IC of the Configuration Register is 1.

If the Instruction Cache 22 is disabled, then the instruction fetch bypasses the Instruction Cache 22, and the contents of the Instruction Cache 22 are unaffected. The instruction is read directly from external memory, partially decoded by the Loader 18 to form an entry (which may contain two partially decoded instructions), and transferred to the execution pipelines.

If the Instruction Cache 22 is enabled for an instruction fetch, then the address bits 3-10 of the instruction's address are decoded to select the set of lines where the instruction may be stored. The selected set of two entries is read and the associated tags are compared with PSR.U along with the 22

6

most-significant bits and bit 2 of the instruction address. If one tag matches and the matching entry is valid, then the entry is transferred to the instruction pipelines for execution. Otherwise, the missing instruotion is read directly from external memory and partially decoded.

If the referenced instruction is missing from the Instruction Cache 22 and the contents of the selected set are all locked, then the handling of the reference is identical to that described above for the case when the Instruction Cache 22 is disabled.

If the referenced instruction is missing from the Instruction Cache 22 and at least one of the entries in the selected set is not locked, then the following actions are taken. One of the entries is selected for replacement. Otherwise, entries are unlocked, then the least recently used entry is selected for replacement. The missing instruction is then read directly from external memory and partially decoded by Loader 18 to form an entry (that may contain two partially decoded instructions) which is transferred to the instruction pipelines for execution. If CIIN is not asserted (low) during the bus cycles to read the missing instruction, then the partially decoded instruction is also written into the Instruction Cache entry selected for replacement, the associated valid bit is set, and the entry is locked if bit CFG.LIC in the Configuration Register is 1. If CIIN is asserted (high) during the bus cycle to read the missing instruction, then the contents of the entry for replacement is unaffected.

After the microprocessor 10 has completed fetching a missing instruction from external memory, it oontinues prefetching sequential instructions. For subsequent sequential instruction fetches, the microprocessor 10 searches the Instruction Cache 22 to determine whether the instruction is located on-chip. If the search is successful or a non-sequential instruction fetch occurs, the microprocessor 10 ceases prefetching. Otherwise, the prefetched instructions are rapidly available to decode and execute. The microprocessor 10 initiates instruction prefetches only during bus cycles that would otherwise be idle because no off-chip data references are required.

It is possible to fetch an instruction and lock it into the Instruction Cache 22 without having to execute the instruction. This can be accomplished by enabling a Debug Trap (DBG) for a Program Counter value that matches two instruction's address. The instruction will be fetched and placed into the Instruction Cache 22 before the trap is processed. If the instruction can be paired with the following instruction, then the entry containing the pair of instructions becomes locked in the Instruction Cache 22.

If an entry contains a pair of instructions, then the tag corresponds to the address of the first instruction (the one at the lower address). If a non-sequential fetch is made to the second instruction, then that instruction will not be found in the paired entry. That instruction can, however, be located in another entry that has a tag corresponding to that instruction's address.

The contents of the Instruction Cache 22 can be invalidated by software or hardware.

The Instruction Cache 22 is invalidated by software as follows: The entire Instruction Cache contents, including locked entries, are invalidated while bit CFG.IC of the Configuration Register is 0. The LRU selection bit is also initialized to 0 while bit CFG.IC is 0. The CINV instruction can be executed to invalidate the entire Instruction Cache contents. Executing CINV invalidates either the entire cache or only unlocked lines according the instruction's Y-option.

The entire Instruction Cache 32 is invalidated in hardware by asserting (low) the $\overline{\text{INVIC}}$ input signal.

When a locked entry is invalidated, it also becomes unlocked.

It should be understood that various alternatives to the embodiments of the invention described herein may be employed in practicing the invention. For example, some microprocessor architectures include an integrated translation lookaside buffer that provides direct virtual to physical address mapping for recently used external memory references; the selective locking concepts of the present invention would be applicable to this type of internal storage element. Thus, it is intended that the following claims define the scope of the invention and that structures and methods within the scope of these claims and their equivalents be covered thereby.

## Claims

1. A microprocessor that processes information retrieved from an external memory via a system bus or from an internal storage element, the microprocessor comprising:
   (a) a cache memory comprising a plurality of storage locations for storing information entries to be processed by the microprocessor;
   (b) means for replacing information entries stored in the internal storage element with information entries retrieved from the external memory; and
   (c) means for locking selected storage locations in the internal storage element memory to prevent replacement of information entries stored in the selected storage locations.

2. A microprocessor that executes instructions and processes data retrieved from an external memory via a system bus or from an integrated cache memory, the microprocessor comprising:

(a) an instruction cache comprising a plurality of storage locations for storing instruction entries comprising instructions to be executed by the microprocessor;

(b) means for replacing instruction entries stored in the instruction cache with instruction entries retrieved from the external memory; and

(c) means for locking selected storage locations in the instruction cache to prevent replacement of instruction entries stored in the selected storage locations.

3. A microprocessor as in claim 2 wherein the means for locking selected storage locations in the instruction cache comprises a configuration register that enables or disables various operating modes for the microprocessor, including the locking of the selected storage locations in the instruction cache.

4. A microprocessor as in claim 3 wherein the configuration register includes means for storing a bit that controls whether a storage location which receives an instruction entry retrieved from external memory is locked.

5. A microprocessor as in claim 2 wherein each instruction entry stored in the instruction cache includes a bit that indicates whether the storage location in which the instruction entry is stored is locked.

6. A microprocessor as in claim 2 and further including means for invalidating instruction entries stored in unlocked storage locations.

7. A microprocessor as in claim 2 and further including means for invalidating all instruction entries stored in the instruction cache, including instruction entries stored in the selected storage locations.

8. A microprocessor as in claim 2 and further including means for locking a selected storage location without the microprocessor executing the instruction included in the instruction entry stored in the selected storage location.

9. A microprocessor that executes instructions and process data retrieved from an external memory via a system bus or from an integrated cache memory, the microprocessor comprising:

(a) a data cache comprising a plurality of storage locations for storing data entries comprising data to be processed by the microprocessor;

(b) means for replacing data entries stored in the data cache with data entries retrieved from the external memory; and

(c) means for locking selected storage locations in the data cache to prevent replacement of data entries stored in the selected storage locations.

10. A microprocessor as in claim 9 wherein the means for locking selected storage locations in the data cache comprises a configuration register that enables or disables various operating modes for the microprocessor, including the locking of the selected storage locations in the data cache.

11. A microprocessor as in claim 10 wherein the configuration register includes means for storing a bit that controls whether a storage location which receives a data entry retrieved from external memory will be locked.

12. A microprocessor as in claim 9 wherein each data entry stored in the data cache includes a bit that indicates whether the storage location in which the data entry is stored is locked.

13. A microprocessor as in claim 9 and further including means for invalidating data entries stored in unlocked storage locations.

14. A microprocessor as in claim 9 and further including means for invalidating all data entries stored in the data cache, including data entries stored in the selected storage locations.

FIG. 1

EP 0 459 233 A2

FIG. 2

FIG. 3

(PSR.U || PC<31:10> || PC<1:0>)

26

PC<10:3>

LOADER

IL BYPASS

COMPARE 0 | COMPARE 1

8

TAG 0 | TAG 1

DEC

256

LRU

DATA 0 LOCK 0 VALID 0 | DATA 1 LOCK 1 VALID 1

SELECT

REPLACEMENT

INSTRUCTION PIPELINES

EP 0 459 233 A2

11